# EUROPEAN PATENT SPECIFICATION

(11) **EP 2 605 922 B1**
(45) Date of publication and mention of the grant of the patent: **03.09.2014**
(21) Application number: 11734125.5
(22) Date of filing: 21.07.2011
(51) Int. Cl.: B60C 29/00, B60C 29/06, B60C 5/20, B60C 5/00, B60C 5/22, B60C 17/01

(54) **TYRE IN TYRE SYSTEMS**
REIFEN IN REIFENSYSTEMEN
SYSTÈMES DE PNEU INCORPORÉS DANS UN PNEU

(30) Priority: 20.08.2010 GB 201013940
(43) Date of publication of application: 26.06.2013
(73) Proprietor: AGCO International GmbH, 8212 Neuhausen am Rheinfall (CH)
(72) Inventor: MULLER, Thomas, 87616 Marktoberdorf (DE); STOIBER, Martin, 87616 Marktoberdorf (DE)
(74) Representative: AGCO Intellectual Property Department
(86) International application number: PCT/EP2011/062542
(87) International publication number: WO 2012/022579

(56) References cited:
- GB-A- 585 682
- US-A- 3 065 763
- US-A- 3 542 110
- US-A1- 2005 279 160

## Description

This invention relates to tyre in tyre systems in which a wheel is provided with an outer ground engaging tyre mounted on a rim of the wheel and an inner inflatable member is mounted on the rim inside the outer tyre, the wheel rim having a first inflation valve mounted on the rim to introduce air into and release air from the inner inflatable member, and a second inflation valve mounted on the rim for introducing air into and releasing air from the interior of the ground engaging tyre external to the inner inflatable member.

Such tyre in tyre systems are well known (see, for example, US Patent Publication No. US/2005/0279160) as a convenient arrangement to allow the tyre pressures of large tyres, such as those used on agricultural tractors, to be relatively easily changed between the relatively low pressures of say 0.8 bar used when undertaking field work to the higher pressures of say 2 bar used on road work. These systems speed up the changing of the effective tyre pressure as often only the pressure of the volume external to the inner inflatable member needs to be changed to achieve the required effective tyre pressure. This significantly reduces the volume of air which must be pumped in or vented.

The ability to relatively easily and speedily change between field and road pressures is becoming increasingly important as it is necessary to operate the tractor as economically and safely as possible which requires the use of the appropriate tyre pressure at all times. Existing tyre in tyre systems can be relatively expensive to implement as they may require the use of non standard wheel rims.

It is an object of the present invention to provide a wheel with a tyre in tyre system which is relatively cheap to implement and which can be used on a standard wheel rim.

Thus according to a first aspect of the present invention there is provided a wheel provided with a tyre in tyre installation in which an outer ground engaging tyre is mounted on a rim of the wheel and an inner inflatable member is mounted on the rim inside the outer tyre, the wheel rim having a first inflation means mounted on the rim to introduce air into and release air from the inner inflatable member, and a second inflation means mounted on the rim for introducing air into and releasing air from the interior of the ground engaging tyre external to the inner inflatable member, wherein the second inflation means is provided with guard means to ensure that air can at all times enter and leave the interior of the ground engaging tyre via an inner end of the second inflation means, the guard means including one or more radially extending bores or formations formed in the inner end of the second inflation means or a component mounted thereon through which air can enter or leave the ground engaging tyre, the second inflation means comprising an inflation valve the inner end of which is provided with a separate head portion which includes the radially extending bores or formations and which is secured to the inner end of the inflation valve so that the radially extending bores or formations communicate with an axially extending bore in the valve, and the valve support body is held within the valve hole by a nut which engages a thread on the exterior of the support body and is sealed to the rim by the separate head portion clamped to the rim by the nut.

The head portion or separate head portion of the inflation valve may be dome shaped.

The valve support body may include a sealing groove for snap-in sealing engagement with the valve hole.

According to a further aspect, the present invention provides a wheel provided with a tyre in tyre installation in which an outer ground engaging tyre is mounted on a rim of the wheel and an inner inflatable member is mounted on the rim inside the outer tyre, the wheel rim having a first inflation means mounted on the rim to introduce air into and release air from the inner inflatable member, and a second inflation means mounted on the rim for introducing air into and releasing air from the interior of the ground engaging tyre external to the inner inflatable member, the wheel being characterised in that the second inflation means is provided with guard means to ensure that air can at all times enter and leave the interior of the ground engaging tyre via an inner end of the second inflation means, the guard means including one or more radially extending bores or formations formed in the inner end of the second inflation means or a component mounted thereon through which air can enter or leave the ground engaging tyre, wherein the guard means comprises a cover which extends over the inner end of the second inflation means and which holds the inner inflatable member away from the inner end of the second inflation means and has openings in the sides of the cover which allow air to enter or leave the ground engaging tyre from the second inflation means.

The second inflation means may comprise an inflation valve having support body for sealing engagement in a valve hole provided in a rim of the wheel, the support body having an axially extending internal bore to receive the valve and a head portion designed to be located within the ground engaging tyre, the head portion including the radially extending bores or formations which communicate with the axially extending internal bore.

The present invention will now be described, by way of example only, with reference to the accompanying drawings in which:

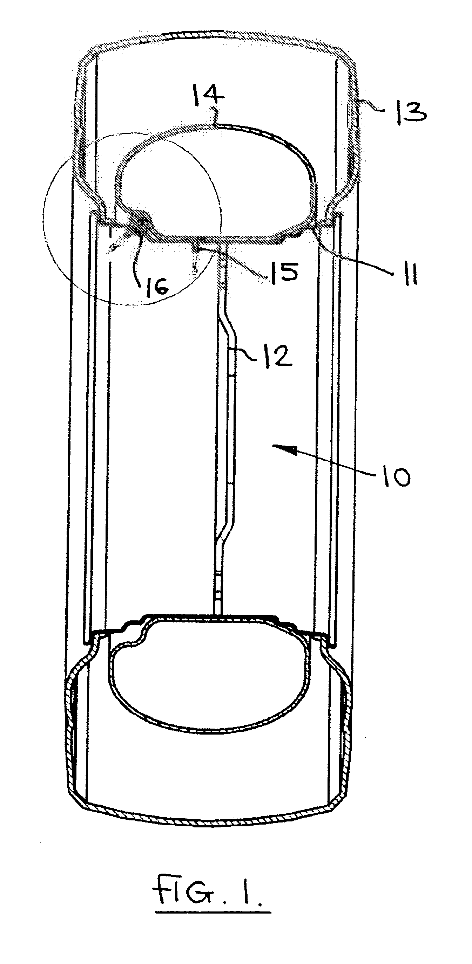

Figure 1 shows a section through a wheel having a tyre in tyre installation in accordance with the present invention;
Figure 2 shows a standardized valve with snap-in fastening to an associated rim;
Figure 3 shows a standardized valve with a sealing washer and nut fastening to an associated rim;
Figure 4 shows a section of the wheel of Figure 1 with the standardised snap-in valve of Figure 2 with the guard means of the present invention;
Figure 5 shows a new valve design including the guard means of the present invention;
Figure 5A shows the design of Figure 5 with the air passages emerging through the underneath of a domed shaped body;
Figure 6 shows the valve of figure 5 mounted on an associated wheel;
Figure 7 shows the standardised snap-in valve of Figure 2 fitted with a separate inner head portion which includes the guard means of the present invention;
Figure 8 shows the standardised nut fastened valve of Figure 3 in which a sealing ring is replaced by a an inner head portion which includes the guard means of the present invention;
Figure 9 shows the standardised snap-in valve of Figure 2 provided with a guard means in the form of a cover which extends over the inner end of the valve, and
Figure 10 shows the standardised nut fastened valve of Figure 3 provided with a guard means in the form of a cover which extends over the inner end of the valve.

Referring to the drawings, a tractor wheel 10 has a rim 11 and a disc 12. A ground engaging tyre 13 is mounted on the rim and an inner inflatable member 14 is mounted inside tyre 13 in the well of the rim. A first inflation valve 15 is provided to introduce air into and release air from within the inner inflatable member 14 and a second inflation valve 16 is provided to introduce air into and release air from within the interior of the ground engaging tyre external to the inner inflatable member.

This is a so-called tyre in tyre installation which is a convenient arrangement to allow the tyre pressures of large tyres, such as those used on agricultural tractors, to be relatively easily changed between the relatively low pressures of say 0.8 bar used when undertaking field work to the higher pressures of say 2 bar used on road work. These tyre in tyre arrangements speed up the changing of the effective tyre pressure as it is often only necessary to change the pressure of the volume external to the inner inflatable member in order to achieve the desired operating pressure which significantly reduces the volume of air which must be pumped in or vented from within the ground engaging tyre.

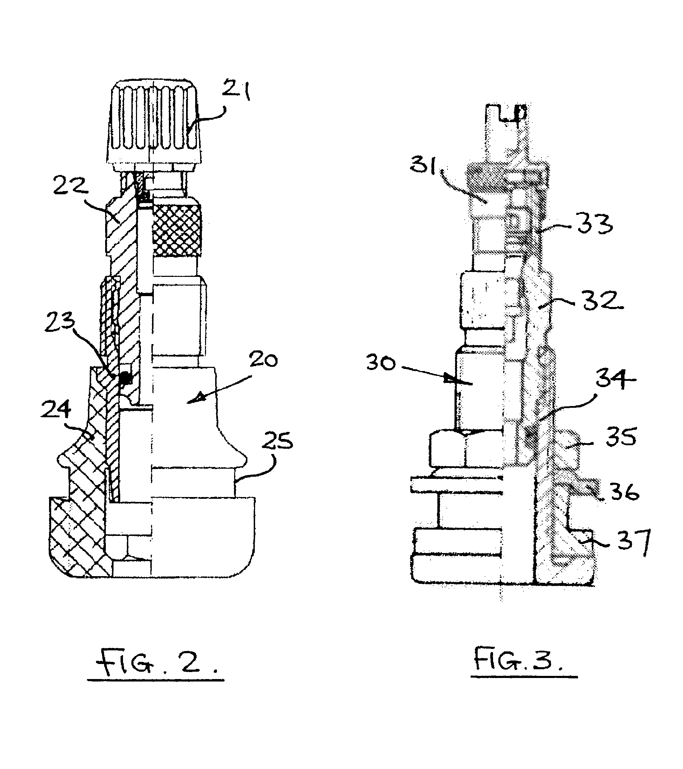

Figure 2 shows a standardized valve 20 with a snap-in function designed with a valve cap 21, a valve core 22, a valve body 23 and an outer rubber sealing part rubber 24 with a snap-in groove 25 for mounting the valve on the rim 11. This valve is mounted on the rim from the inside of the rim in the conventional manner.

Fig. 3 shows a standardized valve 30 with screw on nut attachment function. The valve has a valve cap 31, a valve core 32, a valve core housing 33, a valve body 34, a nut 35, a washer 36 and a sealing ring 37. The valve is mounting on the rim by inserting the sealing ring 37 from inside the rim and the valve body 34 is then inserted through the sealing ring 37 from within the rim. The valve is secured on the rim using the washer 36 and nut 35 which are applied from outside the rim.

Because air must flow in both directions through the valves 20 and 30 the normal check valve built into such valves is not necessary.

The standard valve shown in figure 2 is preferred for use as the second inflation valve 16 of the present invention because the rubber part 24 with the snap in groove 25 allows the valve to move in the event of a collision.

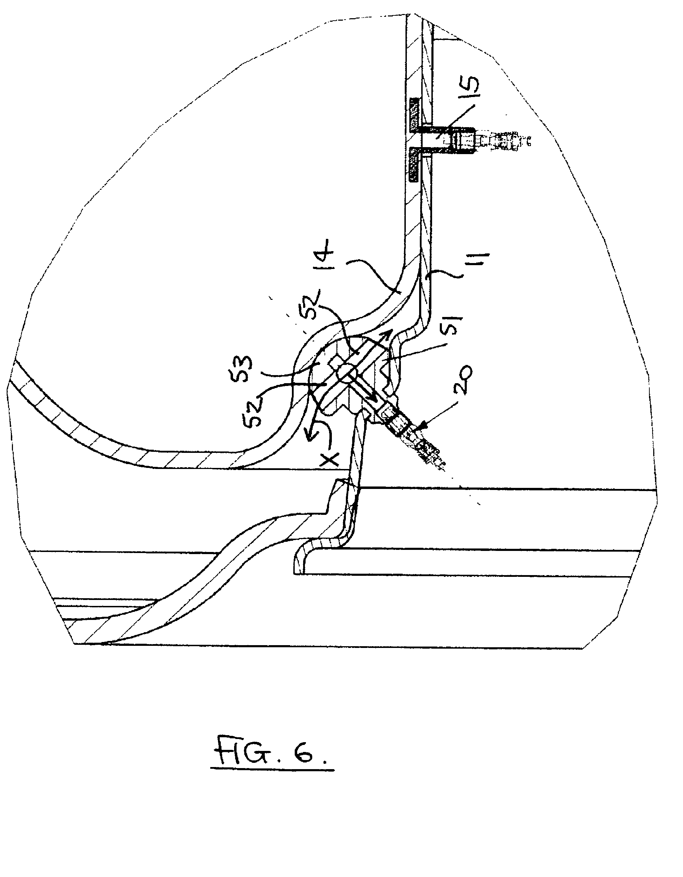

The first inflation valve 15 is directly vulcanised into the inner inflatable member 14 as shown, for example, in Figure 6.

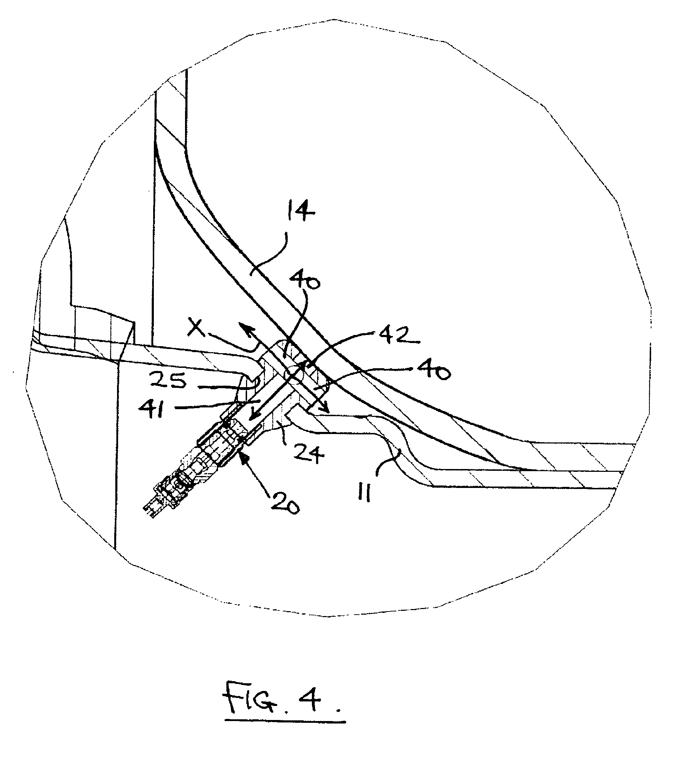

Figure 4 shows a standardized valve 20 according to Figure 2 with guard means in accordance with the present invention in the form of radially extending bores 40 through which air can enter of leave the volume controlled by valve 20 as indicated by arrows X in Figure 4. Radial bores 40 communicate with the remainder of valve 20 via axial bore 41 which may also extend at 42 through the inner end of the valve part 24. As can be seen from Figure 4, the flow of air through bores 40 is ensured even if the inner inflatable member contacts the end of valve portion 24.

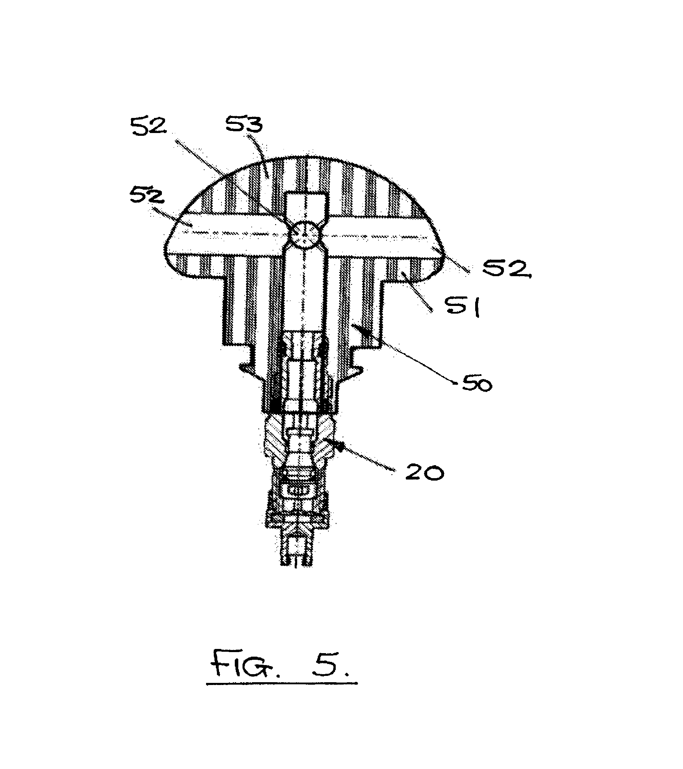

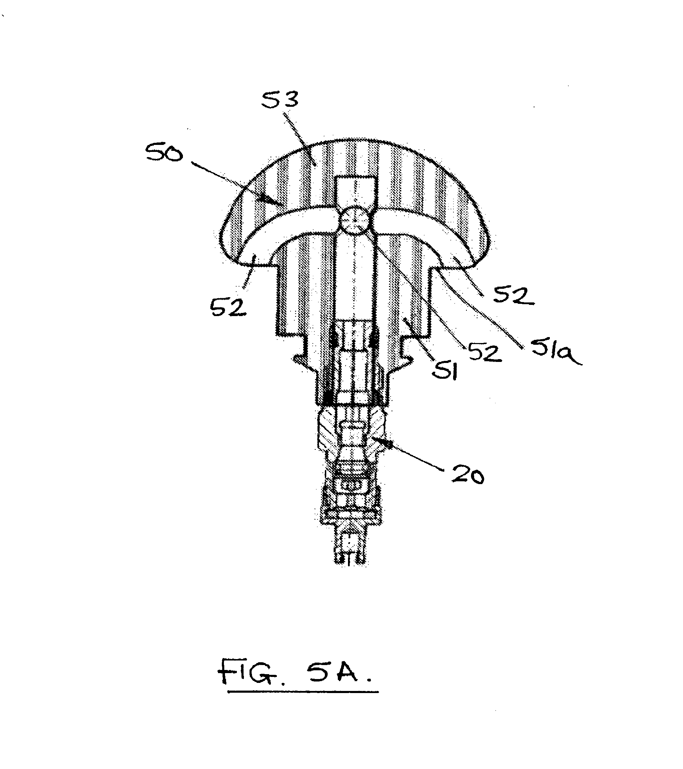

Figure 5 shows a new valve 50 according the present invention which consists of a standard valve 20 according Figure 2 in which the rubber part 24 with snap-in groove 25 is replaced by a valve part 51 which is dome shaped at 53 and which includes radial bores 52 which communicate with the associated valve 20... Figure 6 shows the new valve 50 in its operational position in the wheel rim.

Figure 5A shows the valve 50 of Figure 5 with the bores 52 emerging through the underneath surface 51a of part 51. This provides a construction in which the blocking of bores 52 is even less likely.

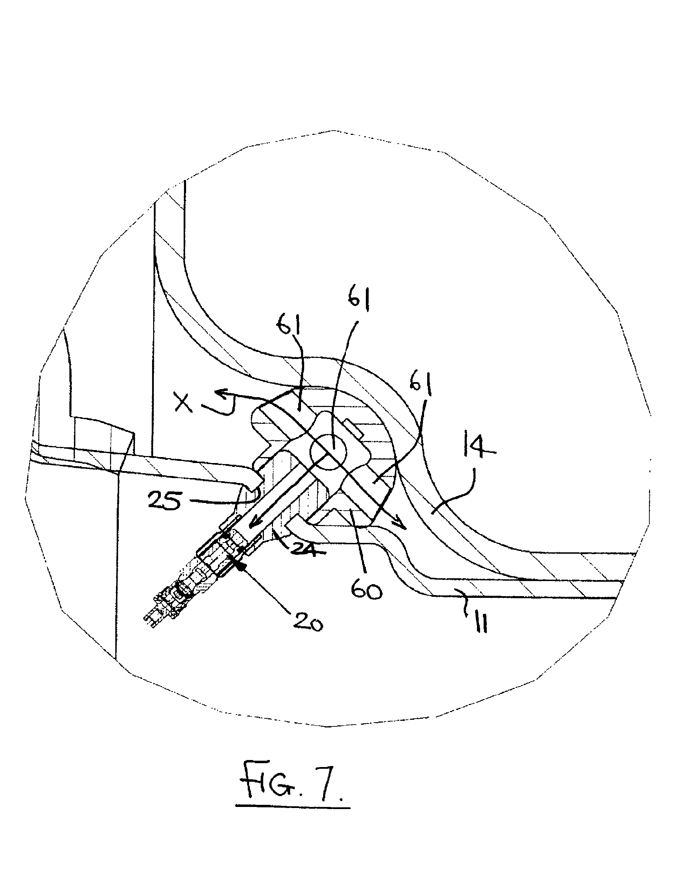

Figure 7 shows a standardized valve 20 according Figure 2 having a separate head portion 60 with radial bores 61 which is mounted on the inner end of valve portion 24 by any suitable means such as screws, glue, pressing, curing etc. Arrows X again show the air flow paths.

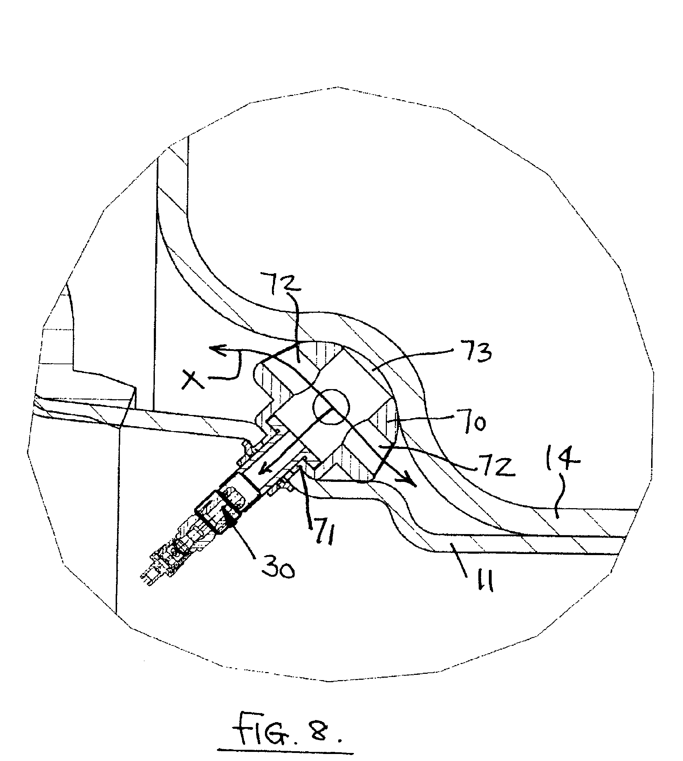

Figure 8 shows a standardized valve 30 according Figure 3 in which the sealing ring 37 is replaced through a part 71 of a dome shaped head portion 70 which includes radial bores 72 to provide the air flow shown again by arrows X. This arrangement is mounted on the rim by inserting the part 71 of head portion 70 through the hole in the rim from within the rim and then inserting the valve through the part 71 via the opening 73 in the inner end of the head portion 70.

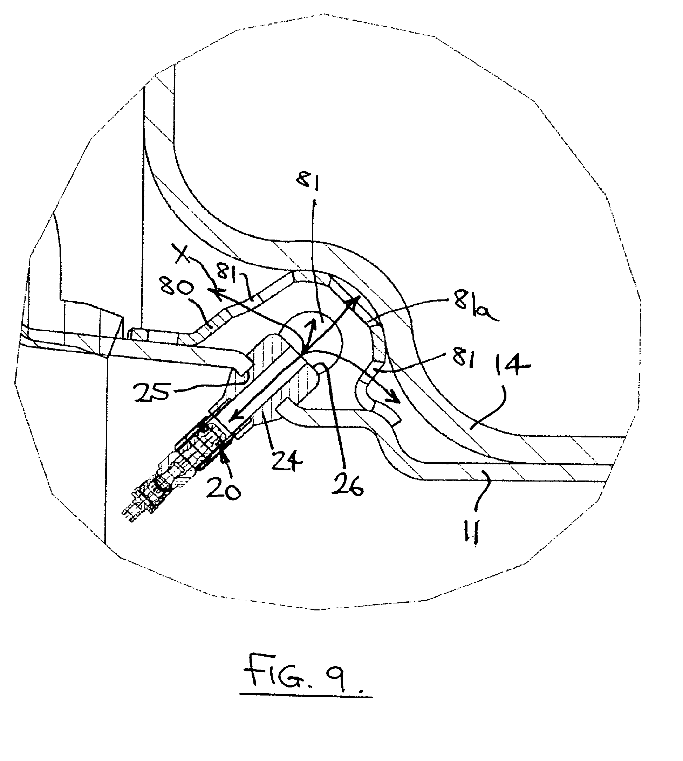

Figure 9 shows a standardized valve 20 according to Figure 2 provided with a guard means in the form of a cover which extends over the inner end 26 of the second valve 20 and which holds the inner inflatable member 14 away from the inner end of the second valve and has openings 81 in the sides of the cover which allow air to enter or leave the ground engaging tyre from the valve 20. The cover is fastened to the rim by screws, glue, welding etc. The valve 20 can be mounted on the rim via the hole 81a in the cover 80.

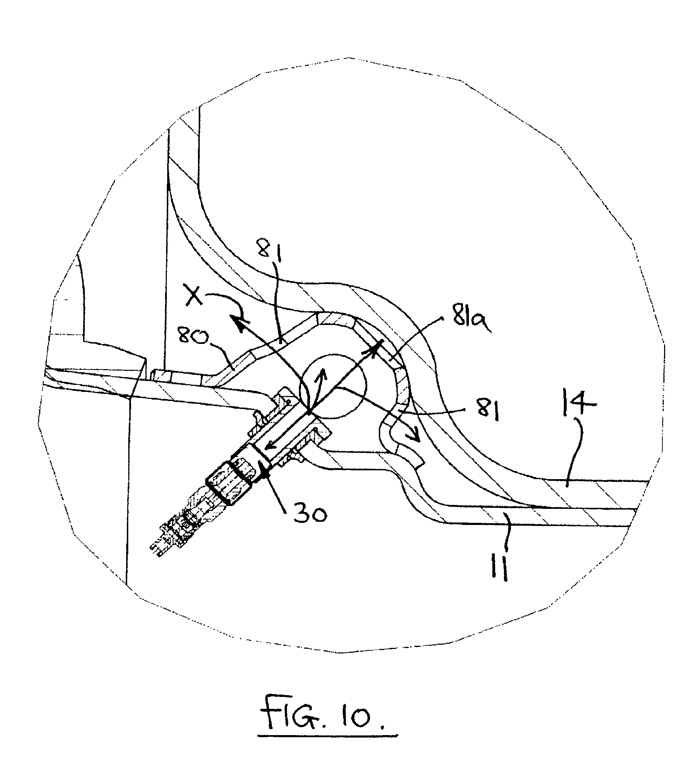

Figure 10 shows a standardized valve 30 according to Figure 3 with the same cover 80 as described in Figure 9.

Although the invention has been described above in relation to arrangements in which first and second inflation valves 15 and 16 mounted on or adjacent the rim 11 are used to control the admission and release of air from within the inner inflatable member 14 and tyre 13 respectively, one or both of these valves may be mounted remotely from the rim 11 (e.g. on the associated wheel disc 12) with an air pipe extending from the remote inflation valve into the interior of the member 14 and/or tyre 13.

In such an arrangement, the various guard means described above involving radial bores or other formations or covers may be used to protect the entry of air from the end of the associated air pipe into the member 14 and/or the tyre 13.

## Claims

1. A wheel (10) provided with a tyre in tyre installation in which an outer ground engaging tyre (13) is mounted on a rim (11) of the wheel and an inner inflatable member (14) is mounted on the rim inside the outer tyre, the wheel rim (11) having a first inflation means (15) mounted on the rim to introduce air into and release air from the inner inflatable member (14), and a second inflation means (16) mounted on the rim (11) for introducing air into and releasing air from the interior of the ground engaging tyre (13) external to the inner inflatable member (14), the wheel being **characterised in that** the second inflation means (16) is provided with guard means to ensure that air can at all times enter and leave the interior of the ground engaging tyre via an inner end of the second inflation means, the guard means including one or more radially extending bores or formations (72) formed in the inner end of the second inflation means or a component mounted thereon through which air can enter or leave the ground engaging tyre, the second inflation means comprising an inflation valve the inner end of which is provided with a separate head portion (70) which includes the radially extending bores or formations (72) and which is secured to the inner end of the inflation valve so that the radially extending bores or formations (72) communicate with an axially extending bore in the valve, and the valve support body is held within the valve hole by a nut (35) which engages a thread on the exterior of the support body and is sealed to the rim by the separate head portion (70) clamped to the rim by the nut.

2. A wheel according to claim 1 in which the head portion or separate head portion (70) of the inflation valve is dome shaped.

3. A wheel according to claim 2 in which the radially extending bores or formations (72) emerge through the underside of the dome.

4. A wheel according to any one of claims 1 to 3 in which the valve support body (24) includes a sealing groove (25) for snap-in sealing engagement with the valve hole.

5. A wheel (10) provided with a tyre in tyre installation in which an outer ground engaging tyre (13) is mounted on a rim (11) of the wheel and an inner inflatable member (14) is mounted on the rim inside the outer tyre, the wheel rim (11) having a first inflation means (15) mounted on the rim to introduce air into and release air from the inner inflatable member (14), and a second inflation means (16) mounted on the rim for introducing air into and releasing air from the interior of the ground engaging tyre (13) external to the inner inflatable member (14), the wheel being **characterised in that** the second inflation means (16) is provided with guard means (80) to ensure that air can at all times enter and leave the interior of the ground engaging tyre (13) via an inner end of the second inflation means, the guard means including one or more radially extending bores or formations (81) formed in the inner end of the second inflation means or a component mounted thereon through which air can enter or leave the ground engaging tyre, wherein the guard means comprises a cover which extends over the inner end (26) of the second inflation means (16) and which holds the inner inflatable member (14) away from the inner end (26) of the second inflation means and has openings in the sides of the cover which allow air to enter or leave the ground engaging tyre from the second inflation means.

6. A wheel according to claim 5 in which the second inflation means comprises an inflation valve having support body (24) for sealing engagement in a valve hole (25) provided in a rim (11) of the wheel, the support body having an axially extending internal bore to receive the valve and a head portion designed to be located within the ground engaging tyre, the head portion including the radially extending bores or formations which communicate with the axially extending internal bore.

## Patentansprüche

1. Rad (10), welches mit einer Reifen-in-Reifen-Einrichtung ausgestattet ist, wobei ein äußerer, mit dem Boden in Wechselwirkung tretender Reifen (13) mit einer Felge (11) des Rads montiert ist und ein inneres aufblasbares Element (14) innerhalb des äußeren Reifens mit der Felge montiert ist, wobei die Felge (11) des Rads ein erstes Aufblasorgan (15) besitzt, welches zum Einführen von Luft in das innere aufblasbare Element (14) und zum Ablassen von Luft aus dem inneren aufblasbaren Element (14)mit der Felge montiert ist, und ein zweites Aufblasorgan (16) besitzt, welches mit der Felge (11) montiert ist zum Einführen von Luft in das Innere des mit dem Boden in Wechselwirkung tretenden Reifens (13) und zum Ablassen von Luft aus dem Inneren des mit dem Boden in Wechselwirkung tretenden Reifens (13) extern von dem inneren aufblasbaren Element (14), wobei das Rad **dadurch gekennzeichnet ist, dass** das zweite Aufblasorgan (16) mit einem Schutzorgan ausgestattet ist, um zu gewährleisten, dass Luft über ein inneres Ende des zweiten Aufblasorgans zu jeder Zeit in das Innere des mit dem Boden in Wechselwirkung tretenden Reifens eintreten kann und aus diesem austreten kann, wobei das Schutzorgan eine oder mehrere sich radial erstreckende Bohrungen oder Ausformungen oder Gebilde (72) besitzt, die in oder an dem inneren Ende des zweiten Aufblasorgans oder einer Komponente, die hiermit montiert ist, gebildet ist/sind, durch welche Luft in den mit dem Boden in Wechselwirkung tretenden Reifen eintreten kann oder aus diesem austreten kann, wobei das zweite Aufblasorgan ein Aufblasventil aufweist, von welchem das innere Ende mit einem separaten Kopfbereich (70) ausgestattet ist, welcher die sich radial erstreckenden Bohrungen oder Ausformungen oder Gebilde (72) besitzt oder aufnimmt und welcher an dem inneren Ende des Aufblasventils befestigt oder gesichert ist, so dass die sich radial erstreckenden Bohrungen oder Ausformungen oder Gebilde (72) mit einer sich axial erstreckenden Bohrung in dem Ventil kommunizieren, und wobei der Ventiltragkörper in der Ventilausnehmung durch eine Buchse oder Mutter (35) gehalten ist, welche eingreift in ein Gewinde auf dem Äußeren des Tragkörpers und gegenüber der Felge abgedichtet ist durch den separaten Kopfbereich (70), welcher durch die Buchse oder Mutter mit der Felge oder gegen diese geklemmt oder verspannt ist.

2. Rad nach Anspruch 1, wobei der Kopfbereich oder separate Kopfbereich (70) des Aufblasventils kuppelartig geformt oder gewölbt ist.

3. Rad nach Anspruch 2, wobei die sich radial erstreckenden Bohrungen oder Ausformungen oder Gebilde (72) durch die Unterseite der Kuppel oder Wölbung verlaufen.

4. Rad nach einem der Ansprüche 1 bis 3, wobei der Ventiltragkörper (24) eine Dichtnut (25) aufweist für eine einschnappende oder einrastende dichtende Wechselwirkung mit der Ventilausnehmung.

5. Rad (10), welches mit einer Reifen-in-Reifen-Ausgestaltung ausgestattet ist, wobei ein äußerer, mit dem Boden in Wechselwirkung tretender Reifen (13) auf einer Felge (11) des Rads montiert ist und ein inneres aufblasbares Element (14) innerhalb des äußeren Reifens auf der Felge montiert ist, wobei die Felge (11) des Rads ein erstes Aufblasorgan (15) besitzt, welches mit der Felge montiert ist zur Einführung von Luft in das innere aufblasbare Element (14) und zum Ablassen von Luft aus dem inneren aufblasbaren Element (14), und mit einem zweiten Aufblasorgan (16), welches mit der Felge montiert ist zur Einführung von Luft in das Innere des mit dem Boden in Wechselwirkung tretenden Reifens (13) und zur Freigabe von Luft aus dem Inneren des mit dem Boden in Wechselwirkung tretenden Reifens (13) extern von dem inneren aufblasbaren Element (14), wobei das Rad **dadurch gekennzeichnet ist, dass** das zweite Aufblasorgan (16) mit mindestens einem Schutzorgan (80) ausgestattet ist, um zu gewährleisten, dass Luft über ein inneres Ende des zweiten Aufblasorgans jederzeit in das Innere des mit dem Boden in Wechselwirkung tretenden Reifens (13) eintreten und aus diesem austreten kann, wobei das Schutzorgan eine oder mehrere sich radial erstreckende Bohrungen oder Ausformungen oder Gebilde (81) besitzt, die an dem inneren Ende des zweiten Aufblasorgans oder einer Komponente, die mit diesem montiert ist, gebildet sind und durch welche Luft in den mit dem Boden in Wechselwirkung tretenden Reifen eintreten kann oder aus diesem austreten kann, wobei das Schutzorgan eine Abdeckung besitzt, welche sich über das innere Ende (26) des zweiten Aufblasorgans (16) erstreckt und welche das innere aufblasbare Element (14) von dem Inneren Ende (26) des zweiten Aufblasorgans weghält und in den Seiten der Abdeckung Öffnungen besitzt, welche ermöglichen, dass Luft von dem zweiten Aufblasorgan in den mit dem Boden in Wechselwirkung tretenden Reifen eintreten kann oder aus diesem austreten kann.

6. Rad nach Anspruch 5, wobei das zweite Aufblasorgan ein Aufblasventil mit einem Tragkörper (24) für eine dichtende Wechselwirkung in oder mit einer Ventilausnehmung (25) in einer Felge (11) des Rads besitzt, wobei der Tragkörper eine sich axial erstreckende innere Bohrung zur Aufnahme des Ventils und einen Kopfbereich, der geeignet gestaltet ist, um in dem mit dem Boden in Wechselwirkung tretenden Reifen angeordnet zu werden, besitzt, wobei der Kopfbereich die sich radial erstreckenden Bohrungen oder Ausformungen aufweist, die mit der sich axial erstreckenden inneren Bohrung kommunizieren.

## Revendications

1. Roue (10) dotée d'une installation de pneu incorporée dans un pneu, dans laquelle un pneu externe en contact avec le sol (13) est monté sur une jante (11) de la roue et un élément gonflable interne (14) est monté sur la jante à l'intérieur du pneu externe, la jante de roue (11) ayant un premier moyen de gonflage (15) monté sur la jante pour introduire de l'air dans l'élément gonflable interne et libérer de l'air de celui-ci, et un second moyen de gonflage (16) monté sur la jante (11) pour introduire de l'air dans l'intérieur du pneu en contact avec le sol (13) et libérer de l'air de celui-ci-ci à l'extérieur de l'élément gonflable interne (14), la roue étant **caractérisée en ce que** le second moyen de gonflage (16) est doté de moyens protecteurs pour s'assurer que de l'air peut à tout moment entrer dans l'intérieur du pneu en contact avec le sol et quitter celui-ci par le biais d'une extrémité interne du second moyen de gonflage, les moyens protecteurs comprenant un ou plusieurs alésages ou formations (72) s'étendant radialement formés dans l'extrémité interne du second moyen de gonflage ou un composant monté sur celle-ci par lequel de l'air peut entrer dans le pneu en contact avec le sol ou quitter celui-ci, le second moyen de gonflage comprenant une valve de gonflage dont l'extrémité interne est dotée d'une partie de tête séparée (70) qui comprend les alésages ou formations (72) s'étendant radialement et qui est fixée à l'extrémité interne de la valve de gonflage de sorte que les alésages ou formations (72) s'étendant radialement communiquent avec un alésage s'étendant axialement dans la valve, et le corps porteur de valve est maintenu dans le trou de valve par un écrou (35) qui met en prise un filet sur l'extérieur du corps porteur et est scellée à la jante par la partie de tête séparée (70) accrochée à la jante par l'écrou.

2. Roue selon la revendication 1, dans laquelle la partie de tête ou la partie de tête séparée (70) de la valve de gonflage est en forme de dôme.

3. Roue selon la revendication 2, dans laquelle les alésages ou formations (72) s'étendant radialement émergent par le dessous du dôme.

4. Roue selon l'une quelconque des revendications 1 à 3, dans laquelle le corps porteur de valve (24) comprend une rainure étanche (25) pour la mise en prise étanche par enclenchement avec le trou de valve.

5. Roue (10) dotée d'une installation de pneu incorporée dans un pneu, dans laquelle un pneu en contact avec le sol extérieur (13) est monté sur une jante (11) de la roue et un élément gonflable interne (14) est monté sur la jante à l'intérieur du pneu externe, la jante de roue (11) ayant un premier moyen de gonflage (15) monté sur la jante pour introduire de l'air dans l'élément gonflable interne (14) et libérer de l'air de celui-ci, et un second moyen de gonflage (16) monté sur la jante pour introduire de l'air dans l'intérieur du pneu en contact avec le sol (13) et libérer de l'air de celui-ci à l'extérieur de l'élément gonflable interne (14), la roue étant **caractérisée en ce que** le second moyen de gonflage (16) est doté de moyens protecteurs (80) pour s'assurer que de l'air peut à tout moment entrer dans l'intérieur du pneu en contact avec le sol (13) et quitter celui-ci par le biais d'une extrémité interne du second moyen de gonflage, les moyens protecteurs comprenant un ou plusieurs alésages ou formations (81) s'étendant radialement formés dans l'extrémité interne du second moyen de gonflage ou un composant monté sur celle-ci par lequel de l'air peut entrer ou quitter le pneu en contact avec le sol, dans laquelle les moyens protecteurs comprennent un couvercle qui s'étend sur l'extrémité interne (26) du second moyen de gonflage (16) et qui maintient l'élément gonflable interne (14) loin de l'extrémité interne (26) du second moyen de gonflage et présente des ouvertures dans les côtés du couvercle qui permettent à l'air d'entrer dans le pneu en contact avec le sol ou quitter celui-ci à partir du second moyen de gonflage.

6. Roue selon la revendication 5, dans laquelle le second moyen de gonflage comprend une valve de gonflage ayant un corps porteur (24) pour la mise en prise étanche dans un trou de valve (25) fourni dans une jante (11) de la roue, le corps porteur présentant un alésage interne s'étendant axialement pour recevoir la valve et une partie de tête conçue pour être située dans le pneu en contact avec le sol, la partie de tête comprenant les alésages ou formations s'étendant radialement qui communiquent avec l'alésage interne s'étendant axialement.
